# EUROPÄISCHE PATENTSCHRIFT

(11) **EP 2 757 272 B1**
(45) Veröffentlichungstag und Bekanntmachung des Hinweises auf die Patenterteilung: **27.04.2016**
(21) Anmeldenummer: 13199082.2
(22) Anmeldetag: 20.12.2013
(51) Int. Cl.: F16B 5/06, B60R 13/02, F16B 21/08

(54) **Befestigungsclip**
Retaining clip
Clip de fixation

(30) Priorität: 17.01.2013 FR 1350418
(43) Veröffentlichungstag der Anmeldung: 23.07.2014
(73) Patentinhaber: TRW Automotive Electronics & Components GmbH, 78315 Radolfzell (DE)
(72) Erfinder: Kuhm, Michel, 67340 Ingwiller (FR); Klein, Jean Luc, 67350 Ringendorf (FR)
(74) Vertreter: Prinz & Partner mbB

(56) Entgegenhaltungen:
- DE-A1- 10 023 109
- GB-A- 1 165 413

## Beschreibung

Die Erfindung betrifft einen Befestigungsclip, insbesondere für ein Verkleidungsteil eines Fahrzeugs, mit einem Grundkörper, an dem ein Halteabschnitt für das Verkleidungsteil und ein Befestigungsabschnitt vorgesehen sind, der in eine Öffnung eines fahrzeugfesten Bauteils, insbesondere eines Karosserieteils, eingeschoben werden und in dieser verrasten kann.

Solche Befestigungsclips sind beispielsweise in der gattungsbildenden GB 1 165 413 A oder der DE 100 23 109 A1 gezeigt.

Befestigungsclips werden verwendet, um Anbauteile, beispielsweise Verkleidungsteile, in einem Fahrzeug karosseriefest zu montieren. Fahrzeugseitig sind Öffnungen vorgesehen, in die der Befestigungsclip eingeschoben und in diesem fixiert werden kann, beispielsweise durch Verrasten. Die Öffnungen sind aber häufig verschieden groß, sodass verschieden große Befestigungsclips erforderlich sind, um das Anbauteil sicher befestigen zu können. Aus dem Stand der Technik sind zwar Befestigungsclips bekannt, die einen flexiblen Befestigungsabschnitt aufweisen, um in verschieden große Befestigungsöffnungen eingeschoben zu werden. Entweder ist aber das Einschieben der Befestigungsclips in die Öffnungen schwierig, oder die Befestigungsclips weisen nur eine unzureichende Haltekraft in der Öffnung auf.

Aufgabe der Erfindung ist es, einen Befestigungsclip bereitzustellen, der eine flexible Anpassung an verschieden große Öffnungen ermöglicht und einen sicheren Halt des Befestigungsclips in der Öffnung gewährleistet.

Zur Lösung der Aufgabe ist ein Befestigungsclip vorgesehen, insbesondere für ein Verkleidungsteil eines Fahrzeugs, mit einem Grundkörper, an dem ein Halteabschnitt für das Verkleidungsteil und ein Befestigungsabschnitt vorgesehen sind, der in eine Öffnung eines fahrzeugfesten Bauteils, insbesondere eines Karosserieteils, eingeschoben werden und in dieser verrasten kann. Erfindungsgemäß weist der Befestigungsabschnitt zumindest zwei flexible Rastflügel auf, die jeweils an einem flexiblen Steg gehalten sind, wobei die Stege voneinander beabstandet sind und sich die Rastflügel voneinander weg von den Stegen erstrecken, wobei zwischen den Stegen ein flexibles Verbindungselement vorgesehen ist, das die Stege auf der gesamten Länge miteinander verbindet. Die Stege sind beispielsweise in einem spitzen Winkel, insbesondere V-förmig, zueinander angeordnet, wobei das Verbindungselement vorzugsweise an den zusammenstehenden Rändern vorgesehen ist.

Der erfindungsgemäße Befestigungsclip weist einen Befestigungsabschnitt auf, der einen verbesserte Anpassung an die Größe der Öffnung ermöglicht, aber auch einen sicheren Halt in der Öffnung gewährleistet. Zum einen können die Stege, da diese voneinander beabstandet sind, aufeinander zu federn und sich somit bereits an verschieden große Öffnungen anpassen. Die Rastflügel sind so ausgebildet, dass diese auf der Rückseite der Öffnung verrasten können und so den Halt des Befestigungsclips in der Öffnung sicherstellen. Die sich von den Stegen weg erstreckenden Rastflügel sind ebenfalls flexibel, sodass zusätzlich eine Anpassung an die Größe der Öffnung möglich ist. Da die Stege über ein flexibles Verbindungselement miteinander verbunden sind, können diese nach dem Einschieben in die Öffnung zudem in ihre Ausgangsposition zurückfedern, sodass ein sicherer Halt des Befestigungsclips in der Öffnung und eine Anpassung an die Größe der Öffnung gewährleistet ist. Zudem bietet dieses flexible Verbindungselement eine zusätzliche Stützfunktion, die ein Wegknicken oder ein Umbiegen des Befestigungsabschnitts, insbesondere der Stege, verhindert, wodurch die Stabilität der Stege und somit des Befestigungsabschnitts verbessert ist.

Die Rastflügel sind in an den freien Enden vorgesehen, die aufgrund des größeren Abstands einen vergrößerten Federweg und somit eine verbesserte Anpassung an verschieden große Öffnungen aufweisen. Die Rastflügel erstrecken sich vorzugsweise in Richtung zum Verbindungselement von den Stegen weg, sodass der Befestigungsabschnitt in einem Querschnitt betrachtet W-förmig bzw. ziehharmonikaartig ausgebildet ist und entsprechend zusammengefaltet werden kann. Da die Stege V-förmig und nicht parallel zueinander stehen, könnten diese nur in unterschiedliche Richtungen, nämlich jeweils senkrecht zu ihrer Fläche, wegknicken. Da beide Stege aber über das Verbindungselement auf der gesamten Länge miteinander verbunden sind, stützen diese sich gegenseitig, so dass ein Einknicken zuverlässig verhindert ist.

Vorzugsweise sind die Rastflügel im Wesentlichen auf der gesamten Länge der Stege an diesen gehalten. Dadurch erhält der Befestigungsabschnitt eine zusätzliche Stabilität, da auch die Rastflügel im Querschnitt betrachtet mit dem jeweiligen Steg einen vorzugsweise spitzen Winkel einschließen. Dadurch ist die Stabilität gegen ein Wegknicken zusätzlich erhöht, wobei die Flexibilität der Rastflügel bzw. des Befestigungsabschnitts zum Anpassen an eine Öffnung eines fahrzeugfesten Bauteils nicht eingeschränkt wird.

Die Rastflügel können im Wesentlichen halbkegelförmig ausgebildet sein bzw. so ausgebildet sein, dass deren Außenflächen auf einer gemeinsamen Kegelfläche liegen.

Der Radius dieses Kegels bzw. der größte Radius des Befestigungsclips beträgt im Querschnitt betrachtet vorzugsweise zwischen 5 und 15 mm.

Der Halteabschnitt kann beispielsweise eine Aufnahme, insbesondere für ein Verkleidungsteil aufweisen, wobei die Aufnahme einen tellerartigen Flansch aufweist, auf den das Verkleidungsteil aufgeschoben werden kann.

Der Flansch weist vorzugsweise einen umlaufenden Ring sowie einen Kopf auf, wobei der Ring über Federelemente begrenzt drehbar am Kopf gelagert ist. Dadurch kann der Ring gegenüber dem Kopf begrenzt verschoben werden, so dass ein Toleranzausgleich zwischen der Öffnung des fahrzeugfesten Bauteils und dem Aufnahmeabschnitt des Verkleidungsteils möglich ist, da die Aufnahme, die das Verkleidungsteil hält, gegenüber der Öffnung geringfügig verschoben werden kann.

Vorzugsweise erstrecken sich die Federelemente spiralförmig vom Kopf zum Ring, sodass diese eine gute Federfunktion bereitstellen können.

Weitere Vorteile und Merkmale finden sich in der nachfolgenden Beschreibung in Verbindung mit den beigefügten Zeichnungen. In diesen zeigen:
- Figur 1 eine perspektivische Ansicht eines erfindungsgemäßen Befestigungsclips,
- Figur 2 eine Seitenansicht des Befestigungsclips aus Figur 1,
- Figur 3 eine Ansicht des Halteabschnitts des Befestigungsclips aus Figur 1,
- Figur 4 eine Schnittansicht durch den Befestigungsabschnitt des Befestigungsclips aus Figur 1,
- Figur 5 eine zweite Schnittansicht durch den Befestigungsabschnitt des Befestigungsclips aus Figur 1,
- Figur 6 einen Längsschnitt durch den Befestigungsclips aus Figur 1,
- Figur 7 eine perspektivische Ansicht des Befestigungsabschnitts des Befestigungsclips aus Figur 1, und
- Figur 8 eine Schnittansicht durch den Befestigungsclip aus Figur 1 in montiertem Zustand.

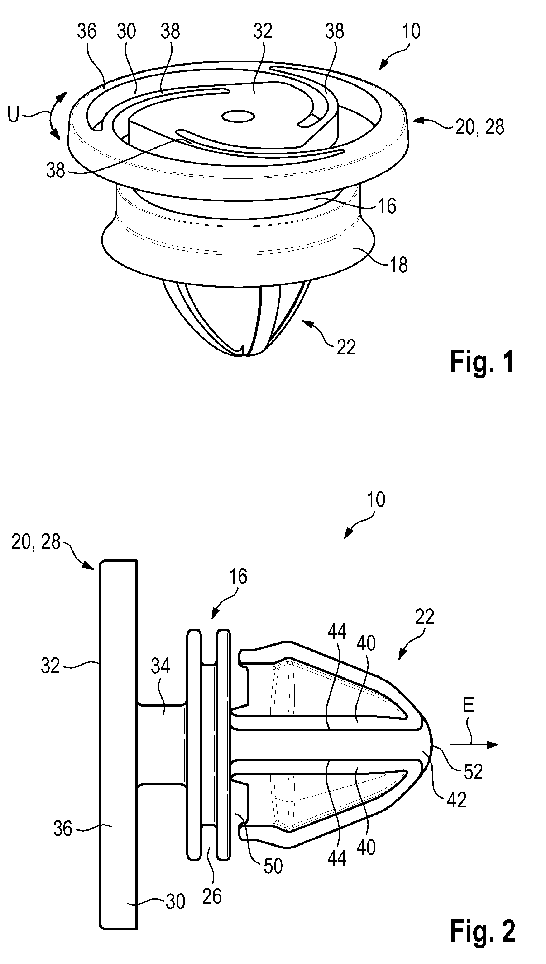

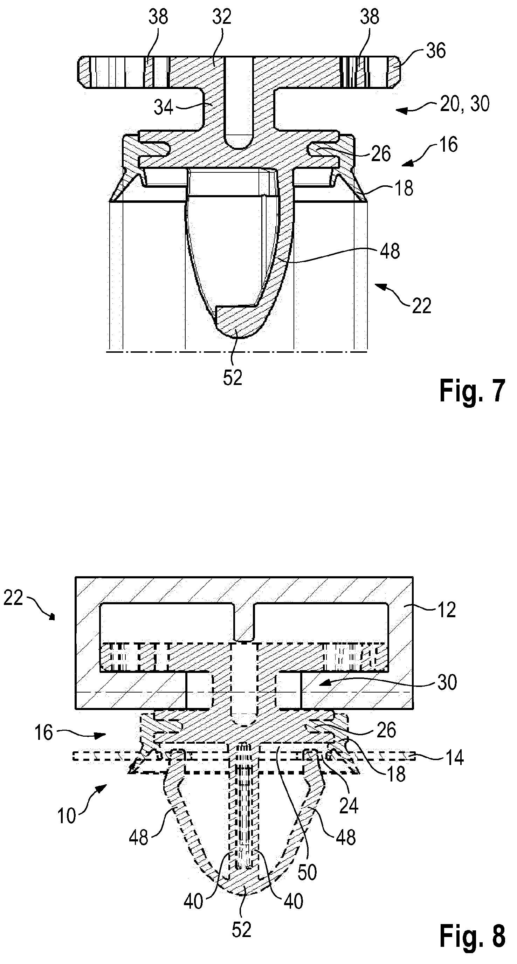

In Figur 1 ist ein Befestigungsclip 10 zur Befestigung eines Anbauteils, beispielsweise eines Verkleidungsteils 12, an einem Karosserieteil 14 gezeigt (siehe auch Figur 8).

Der Befestigungsclip 10 hat einen im Wesentlichen scheibenförmigen Grundkörper 16, an dem eine umlaufende Dichtung 18 vorgesehen ist. Am Grundkörper 16 ist des Weiteren ein Halteabschnitt 20 vorgesehen, an dem das Verkleidungsteil 12 montiert werden kann, sowie ein Befestigungsabschnitt 22, um den Befestigungsclip 10 in einer Öffnung 24 des Karosserieteils 14 zu befestigen (siehe Figur 8).

Wie in Figur 2 zu sehen ist, ist der Grundkörper 16 im Wesentlichen tellerartig ausgebildet und weist eine umlaufende Nut 26 zur Befestigung der Dichtung 18 auf.

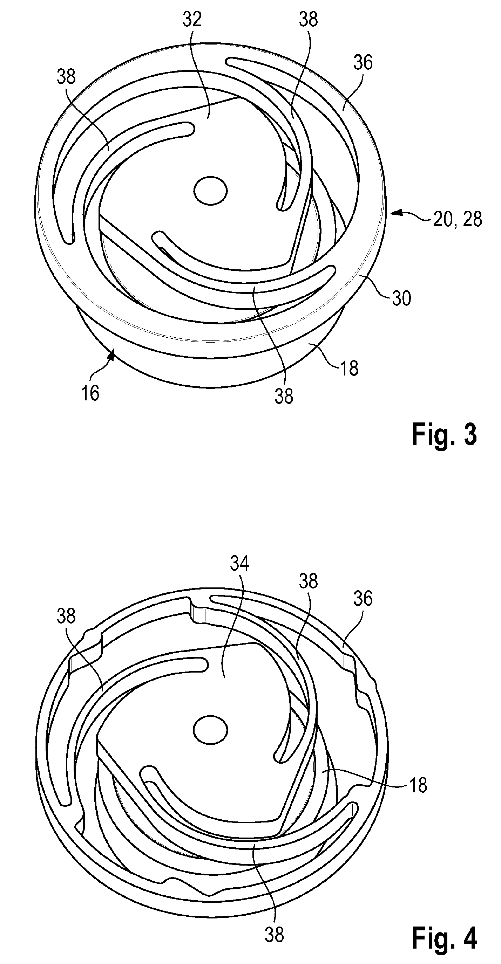

Der Halteabschnitt 20 hat eine Aufnahme 28 für das Verkleidungsteil 12, die einen tellerartigen Flansch 30 aufweist (Figuren 3 und 4). Der tellerartige Flansch 30 weist einen Kopf 32 auf, der über einen Fortsatz 34 mit dem Grundkörper 16 verbunden ist. Des Weiteren ist ein Ring 36 vorgesehen, der den Kopf 32 in Umfangsrichtung umschließt und mit mehreren Federelementen 38, die sich spiralförmig vom Kopf 32 zum Ring 36 erstrecken, am Kopf 32 gelagert ist.

Durch die spiralförmigen Federelemente 38 ist der Ring 36 sowohl in Umfangsrichtung U begrenzt drehbar wie auch in der Ebene des Ringes 36 verschiebbar am Kopf 32 gelagert.

Das Verkleidungsteil 12 wird am Ring 36 befestigt und kann mit dem Ring 36 gegenüber dem Grundkörper bzw. dem Befestigungsabschnitt 22 begrenzt verschoben oder verdreht werden, wodurch die Montage des Verkleidungsteils 12bzw. des Befestigungsclips 10 vereinfacht ist bzw. ein Toleranzausgleich zwischen Öffnung 24 bzw. Karosserieteil 14 und Verkleidungsteil 12 erfolgen kann.

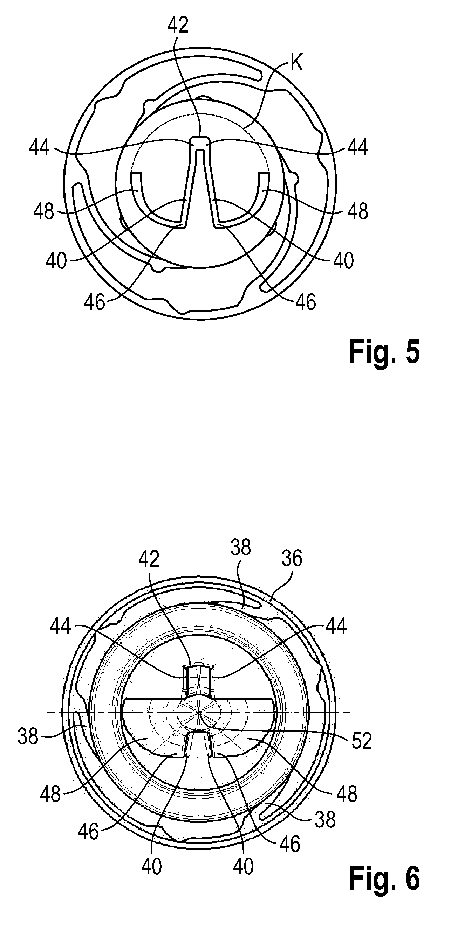

Wie insbesondere in Figur 2 zu sehen ist, weist der Befestigungsabschnitt 22 zwei in Einschubrichtung E verlaufende, flächige Stege 40 auf. Die Stege 40 sind im Querschnitt betrachtet V-förmig angeordnet und schließen einen Winkel von ca. 20° ein (siehe Figur 5).

Beide Stege 40 sind flexibel ausgebildet, so dass diese aufeinander zu federn können. An den zusammenstehenden Rändern 44 der Stege 40 sind diese über die gesamte Länge in Einschubrichtung E mit einem flexiblen Verbindungselement 42 miteinander verbunden.

An den freien Rändern 46 der Stege, die weiter voneinander beabstandet sind, ist jeweils ein Rastflügel 48 vorgesehen.

Die Rastflügel 48 sind im Wesentlichen auf der gesamten Länge der Stege 40 an diesen gehalten, wobei zwischen Rastflügel 48 und Grundkörper 16 ein Spalt 50 gebildet ist (Figur 2). Die Rastflügel 48 erstrecken sich im Querschnitt betrachtet (siehe Figur 5) annähernd auf einer Kreisbahn K vom Steg 40 weg, wobei sich jeder Rastflügel 48 im Querschnitt betrachtet annähernd über einen Viertelkreis erstreckt.

In Einschubrichtung E verjüngen sich die Rastflügel 48, sodass diese an der Spitze 52 in die Stege 40 übergehen (Figuren 2 und 6). Wie insbesondere in den Figuren 1 und 7 zu sehen ist, sind die Rastflügel 48 dadurch im Wesentlichen halbkegelförmig ausgebildet, wobei die Außenflächen beider Rastflügel 48 annähernd auf einer gemeinsamen Kegelfläche liegen. Der Kegel hat einen Öffnungswinkel von ca. 20°.

Der maximale Radius R der Rastflügel 48 beträgt vorzugsweise zwischen 5 und 15 mm.

Im in Einschubrichtung E hinteren, dem Grundkörper 16 gegenüberliegenden Bereich verjüngen sich die Rastflügel 48, der Radius der Umhüllenden der Rastflügel 48 wird also wieder kleiner. Die Außenflächen der Rastflügel 48 liegen in diesem Bereich annähernd auf einem entgegengesetzt ausgerichteten Kegel.

Die Stege 40 sowie die Rastflügel 48 sind flexibel ausgebildet. Auch das Verbindungselement 42 kann flexibel nachgeben.

Zur Montage des Befestigungsclips 10 wird dieser mit dem Befestigungsabschnitt 22 in Einschubrichtung E in die Öffnung 24 eines Bauteils 14 eingeschoben (Figur 8).

Da sowohl die Rastflügel 48 wie auch die Stege 40 flexibel ausgebildet sind, kann sich der Befestigungsclip 10 flexibel an die Größe der Öffnung 24 anpassen. Zum einen können die Rastflügel 48 flexibel nachgeben und gegen die Stege 40 gedrängt werden. Des Weiteren können die Stege 40, da diese ebenfalls flexibel ausgebildet sind und lediglich mit einem flexiblen Verbindungselement 42 verbunden sind, aufeinander zu federn, bis diese flächig aneinander anliegen.

Wie insbesondere in Figur 5 zu sehen ist, sind die Rastflügel und die Stege 40 im Querschnitt betrachtet ziehharmonika- bzw. W-förmig angeordnet, sodass diese beim Einschieben in die Öffnung 24 gewissermaßen aufeinander zu zusammengefaltet werden können.

Ist der Befestigungsclip vollständig in die Öffnung 24 eingeschoben, sodass die Dichtung 18 am Bauteil 14 anliegt, kann sich der Befestigungsabschnitt 22 bzw. können sich die Rastflügel 48 und die Stege 40 zurück in die Ausgangsposition bewegen, in der die Rastflügel 48 hinter der Öffnung 24 des Bauteils 14 verrasten. Die Stege 40 werden durch das Verbindungselement 42 auseinander gedrückt.

Aufgrund der Flexibilität der Rastflügel 48 und der Stege 40 sowie der flexiblen Befestigung der Stege 40 durch das Verbindungselement 42 ist somit eine hohe Flexibilität des Befestigungsabschnitts 22 gegeben, sodass eine Anpassung an verschieden große Öffnungen 24, aber auch eine stabile Montage in der Öffnung 24 möglich ist.

Da die Stege 40 in der gezeigten Ausführungsform V-förmig angeordnet und über das Verbindungselement 42 miteinander verbunden sind, können diese beim Einschieben in die Öffnung 24 auch nicht wegknicken, so dass der Befestigungsabschnitt 22 eine höhere Stabilität aufweist. Auch die Rastflügel 48 sind im Querschnitt betrachtet in einem spitzen Winkel zum jeweiligen Steg 40 angeordnet, so dass zwischen Rastflügel 48 und Steg 40 ebenfalls eine Kante gebildet ist, die eine erhöhte Stabilität des Befestigungsabschnitts 22 gewährleistet.

## Patentansprüche

1. Befestigungsclip (10), insbesondere für ein Verkleidungsteil (12) eines Fahrzeugs, mit einem Grundkörper (16), an dem ein Halteabschnitt (20) für das Verkleidungsteil (12) und ein Befestigungsabschnitt (22) vorgesehen sind, der in eine Öffnung (24) eines fahrzeugfesten Bauteils (14), insbesondere eines Karosserieteils, eingeschoben werden und in dieser verrasten kann, wobei der Befestigungsabschnitt (22) zumindest zwei flexible Rastflügel (48) aufweist, die jeweils an einem flexiblen Steg (40) gehalten sind, wobei die Stege (40) voneinander beabstandet sind und sich die Rastflügel (48) voneinander weg von den Stegen (40) erstrecken, und zwischen den Stegen (40) ein flexibles Verbindungselement (42) vorgesehen ist, das die Stege (40) auf der gesamten Länge miteinander verbindet, **dadurch gekennzeichnet, dass** die Stege (40) in einem spitzen Winkel, insbesondere V-förmig, zueinander angeordnet sind.

2. Befestigungsclip nach Anspruch 1, **dadurch gekennzeichnet, dass** die Rastflügel (48) im Wesentlichen auf der gesamten Länge der Stege (40) an diesen gehalten sind.

3. Befestigungsclip nach einem der vorhergehenden Ansprüche, **dadurch gekennzeichnet, dass** die Rastflügel (48) im Wesentlichen halbkegelförmig ausgebildet sind.

4. Befestigungsclip nach einem der vorhergehenden Ansprüche, **dadurch gekennzeichnet, dass** der Halteabschnitt (20) eine Aufnahme (26), insbesondere für ein Verkleidungsteil (12) aufweist, wobei die Aufnahme (26) einen tellerartigen Flansch aufweist.

5. Befestigungsclip nach Anspruch 4, **dadurch gekennzeichnet, dass** der Flansch (30) einen umlaufenden Ring (36) sowie einen Kopf (32) aufweist, wobei der Ring (36) über Federelemente (38) begrenzt drehbar am Kopf (32) gelagert ist.

6. Befestigungsclip nach Anspruch 5, **dadurch gekennzeichnet, dass** sich die Federelemente (38) spiralförmig vom Kopf (32) zum Ring (36) erstrecken.

## Claims

1. A fastening clip (10), in particular for a lining part (12) of a vehicle, comprising a base body (16) which has a retaining portion (20) for the lining part (12) and a fastening portion (22) provided thereon which can be inserted into an opening (24) of a vehicle-fixed component (14), in particular of a vehicle body part, and which can latch therein, the fastening portion (22) including at least two flexible latching wings (48) each held on a flexible web (40), the webs (40) being spaced apart from each other, and the latching wings (48) extending from the webs (40) and away from each other, and a flexible connecting element (42) connecting the webs (40) to each other on the entire length being provided between the webs (40), **characterized in that** the webs (40) are arranged at an acute angle, in particular in a V-shape, with respect to each other.

2. The fastening clip according to claim 1, **characterized in that** the latching wings (48) are held on the webs (40) substantially on the entire length thereof.

3. The fastening clip according to either of the preceding claims, **characterized in that** the latching wings (48) are configured in a substantially semi-conical shape.

4. The fastening clip according to any of the preceding claims, **characterized in that** the retaining portion (20) includes a seat (26), in particular for a lining part (12), the seat (26) having a plate-like flange.

5. The fastening clip according to claim 4, **characterized in that** the flange (30) has a surrounding ring (36) and a head (32), the ring (36) being mounted to the head (32) by means of spring elements (38) so as to be rotatable to a limited extent.

6. The fastening clip according to claim 5, **characterized in that** the spring elements (38) extend in a spiral manner from the head (32) to the ring (36).

## Revendications

1. Clip de fixation (10), en particulier pour une pièce de revêtement (12) d'un véhicule, comportant un corps de base (16) sur lequel sont prévus un tronçon de support (20) pour la pièce de revêtement (12) et un tronçon de fixation (22) qui peut être inséré et s'enclencher dans un orifice (24) d'un composant (14) solidaire au véhicule, en particulier d'une pièce de carrosserie, le tronçon de fixation (22) présentant au moins deux ailes d'enclenchement flexibles (48) qui sont chacune retenues sur une barrette flexible (40), les barrettes (40) étant espacées l'une de l'autre et les ailes d'enclenchement (48) s'étendant depuis les barrettes (40) en éloignement l'une de l'autre, et un élément de raccordement flexible (42) étant prévu entre les barrettes (40), lequel relie les barrettes (40) l'une à l'autre sur toute la longueur, **caractérisé en ce que** les barrettes (40) sont agencées selon un angle aigu, en particulier en forme de V l'une par rapport à l'autre .

2. Clip de fixation selon la revendication 1, **caractérisé en ce que** les ailes d'enclenchement (48) sont retenues sur les barrettes (40) sensiblement sur toute la longueur de celles-ci.

3. Clip de fixation selon l'une des revendications précédentes, **caractérisé en ce que** les ailes d'enclenchement (48) sont réalisées sensiblement en forme de demi-cône.

4. Clip de fixation selon l'une des revendications précédentes, **caractérisé en ce que** le tronçon de support (20) présente un logement (26), en particulier pour une pièce de revêtement (12), le logement (26) présentant une bride en forme de disque.

5. Clip de fixation selon la revendication 4, **caractérisé en ce que** la bride (30) présente un anneau circonférentiel (36) ainsi qu'une tête (32), l'anneau (36) étant monté en rotation limitée sur la tête (32) au moyen d'éléments ressort (38).

6. Clip de fixation selon la revendication 5, **caractérisé en ce que** les éléments ressort (38) s'étendent en spirale de la tête (32) à l'anneau (36).
